# FASCICULE DE BREVET EUROPEEN

(11) **EP 3 526 503 B1**
(45) Date de publication et mention de la délivrance du brevet: **01.12.2021**
(21) Numéro de dépôt: 17793713.3
(22) Date de dépôt: 13.10.2017
(51) Int. Cl.: F16L 1/19, F16L 1/20, F16L 1/23

(54) **DISPOSITIF DE RETENUE D'UN EMBOUT DE CONNEXION DE LIGNE FLEXIBLE SOUS-MARINE PARTIELLEMENT IMMERGEE**
VORRICHTUNG ZUM HALTEN EINES VERBINDUNGSENDSTÜCKS EINER TEILWEISE VERSENKTEN FLEXIBLEN UNTERWASSERLEITUNG
DEVICE FOR HOLDING A CONNECTION END FITTING OF A PARTIALLY SUBMERGED UNDERWATER FLEXIBLE LINE

(30) Priorité: 14.10.2016 FR 1659987
(43) Date de publication de la demande: 21.08.2019
(73) Titulaire: TECHNIP N-POWER, 92400 Courbevoie (FR)
(72) Inventeur: ROUTEAU, Sylvain, 92210 Saint-Cloud (FR); BERGER, Hans, 93170 Bagnolet (FR)
(74) Mandataire: Fédit-Loriot
(86) Numéro de dépôt international: PCT/FR2017/052822
(87) Numéro de publication internationale: WO 2018/069659

(56) Documents cités:
- WO-A1-2011/080459
- US-A- 3 748 702
- US-A1- 2002 021 942
- US-A1- 2015 125 216

## Description

La présente invention se rapporte à un dispositif de retenue pour pouvoir retenir, sur un bâtiment de pose de ligne flexible en milieu marin, un embout de connexion d'une ligne flexible sous-marine partiellement immergée.

Un domaine d'application envisagé est notamment celui du déploiement en milieu marin de conduites flexibles pour le transport des hydrocarbures ou d'ombilicaux pour le transport de fluides et/ou la transmission d'énergie et/ou d'informations aux équipements sous-marins ou de conduites combinant la fonction d'une conduite flexible et d'un ombilical, pour lequel il convient de dévider des tronçons de ligne flexible que l'on relie entre eux par des embouts de connexion sur le bâtiment de pose.

Les conduites flexibles sous-marines permettent essentiellement le transport du pétrole ou du gaz, extrait des gisements sous-marins. Elles sont décrites dans les documents normatifs API RP 17B « Recommended Practice for Flexible Pipe » (5^{ème} édition-Mars 2014), et API 17 J « Spécification for Unbonded Flexible Pipe» (4^{ème} édition-Mai 2014), publiés par l'American Petroleum Institute (API).

S'agissant des ombilicaux, ces derniers servent généralement à transmettre de l'énergie et/ou des informations aux équipements sous-marins tels que les vannes, les collecteurs, les pompes ou tout autre équipement nécessitant d'être alimenté en énergie dans le cadre de leur fonctionnement. Les ombilicaux peuvent dans certains cas être employés pour le transport de fluides aux fins de faciliter l'écoulement des hydrocarbures au sein des conduites flexibles par exemple. Les ombilicaux sont notamment décrits au sein du document normatif API 17E «Spécification for Subsea Umbilicals » (4^{ème} édition-Avril 2011) publié par l'American Petroleum Institute (API).

Aussi, il est connu de transporter sur un bâtiment de pose les tronçons de ligne flexible et de les dévider un à un dans le milieu marin à travers un puits ménagé dans le bâtiment de pose, en les raccordant entre eux sur ce bâtiment de pose. Pour ce faire, il est connu de mettre en œuvre, d'une part une table de retenue au-dessus du puits, la table de retenue présentant un passage central conique autorisant le passage de la ligne flexible, et d'autre part une pluralité d'organes d'arrêt destinés à être manuellement agencés au sein dudit passage central. Ainsi, les tronçons se terminent par un embout de connexion aval et lorsque ce dernier arrive au niveau de la table de retenue, les opérateurs viennent agencer manuellement, à l'aide de poignées de manutention, les organes d'arrêt se trouvant en position écartés à l'intérieur du passage central conique autour du tronçon. Puis, les opérateurs procèdent à la fermeture manuelle des organes d'arrêts sur l'embout de connexion aval. Les organes d'arrêt viennent alors s'appuyer contre la paroi conique du passage central et se rapprochent alors les uns des autres à mesure qu'ils s'y enfoncent, jusqu'à venir en butée radial avec l'embout de connexion aval. De la sorte, le diamètre du passage central est réduit substantiellement, et l'ensemble des organes d'arrêt forme alors un épaulement sur lequel vient s'appuyer l'embout de connexion aval du tronçon dévidé. L'extrémité du tronçon est alors retenue sur le bâtiment de pose par l'intermédiaire de son embout de connexion aval, et on vient alors raccorder un embout de connexion amont d'un tronçon suivant sur l'embout de connexion aval. Lorsque les deux embouts de connexion, aval et amont, sont solidaires l'un de l'autre, on relève sensiblement ces deux embouts en tirant sur ledit tronçon suivant de manière à donner un accès aux opérateurs aux organes d'arrêts afin qu'ils procèdent à leur ouverture. Puis, les organes d'arrêts sont alors retirés du passage central à l'aide des poignées de manutention et la table de retenue est ouverte manuellement afin d'autoriser le passage du tronçon. Ledit tronçon suivant est alors retenu par des tensionneurs situés au-dessus de la table de retenue, de manière à ce que les deux embouts de connexion, aval et amont, puissent traverser le puits du bâtiment de pose de manière contrôlée. On dévide ainsi ledit tronçon suivant jusqu'à son extrémité aval pour le raccorder à nouveau, de la même façon à un autre tronçon.

Le document WO 2011/0 80 459 décrit un tel dispositif de retenue et sa mise en œuvre.

Bien que les organes d'arrêt soient munis de poignées de manutention pour que les opérateurs puissent les manipuler plus aisément, leur manipulation n'en demeure pas moins laborieuse en ce qu'elle requiert une force physique importante et une certaine habileté. En outre, les opérateurs interviennent pendant une durée relativement longue à l'aplomb de charges importantes lorsqu'ils installent le dispositif de retenue, ce qui accroît les risques d'accident.

Par ailleurs, la géométrie conique du passage central impose de fortes contraintes au niveau de la table de retenue lorsque le poids de la ligne flexible repose sur le dispositif de retenue. Or, en fonction de la longueur et du diamètre de la ligne flexible, le dispositif de retenue peut être amené à reprendre des charges supérieures à sept cent tonnes. Pour cela, la table de retenue ainsi que les éléments qui la composent, notamment les organes d'ouverture et de fermeture, doivent être dimensionnés en conséquence résultant en une table de retenue particulièrement massive. Le dispositif de retenue devient rapidement encombrant et difficilement manipulable à la main compte tenu des efforts mis en jeu. Ainsi, afin de fournir un dispositif de retenue selon l'art antérieur peu encombrant, il est nécessaire de limiter les capacités du dispositif de retenue. Une telle solution n'est donc pas satisfaisante compte tenu du poids de certaines lignes flexibles.

De plus, le passage central étant conique, l'effort exercé sur l'embout de connexion aval lorsque celui-ci repose sur le dispositif de retenue est particulièrement important. Ainsi, plus le poids de la ligne flexible est important, plus l'effort exercé sur l'embout de connexion aval est important. Or, de manière générale, un embout de connexion d'une ligne flexible est particulièrement fragile en ce qu'il doit assurer l'étanchéité de la ligne pendant une durée d'au moins 20 ans dans des conditions particulièrement sévères. Ainsi, les contraintes sur l'embout de connexion aval doivent être limitées afin de ne pas favoriser sa dégradation pendant la durée d'opération de ce dernier.

Le document US 3 748 702 concerne des moyens motorisés de préhension d'un organe cylindrique pour contrôler le mouvement rotatif et axial de cet organe. Et la principale application prévue vise à réguler ou contrôler le mouvement des colonnes de forage, des colonnes de tubes de production, du tubage et d'autres éléments cylindriques utilisés dans le forage de puits pétroliers.

Aussi, un problème qui se pose et que vise à résoudre la présente invention est de simplifier la manipulation des organes d'arrêt, fournir un dispositif de retenue moins dangereux pour les opérateurs et apte à reprendre d'importantes charges tout en préservant l'intégrité des embouts de connexion de lignes flexibles.

Dans ce but, il est proposé un dispositif de retenue pour pouvoir retenir, sur un bâtiment de pose de ligne flexible en milieu marin, un embout de connexion aval d'une ligne flexible sous-marine partiellement immergée, ladite ligne flexible présentant un axe longitudinal et ledit embout de connexion aval présentant un épaulement s'étendant radialement par rapport audit axe longitudinal, ledit dispositif de retenue comprenant : une table de retenue présentant un passage central au travers duquel est destiné à s'étendre ladite ligne flexible et, une pluralité d'organes d'arrêt agencés autour dudit passage central et mobiles entre une position ouverte où ils sont écartés les uns des autres et une position fermée où ils sont rapprochés les uns des autres, chacun des organes d'arrêt présentant une portée d'appui sur laquelle ledit épaulement dudit embout de connexion aval est destiné à reposer lorsque lesdits organes d'arrêts sont en position fermée de manière à retenir ledit embout de connexion aval à travers ledit passage central. Le dispositif est remarquable en ce qu'il comprend en outre au moins un ensemble d'entraînement configuré pour entraîner lesdits organes d'arrêt entre ladite position ouverte et ladite position fermée.

Ainsi, une caractéristique de l'invention réside dans la mise en oeuvre d'au moins un ensemble d'entraînement permettant d'entraîner les organes d'arrêts entre une position ouverte et une position fermée. On comprend alors que l'intervention des opérateurs est limitée puisque ces derniers non plus à réaliser la manipulation des organes d'arrêts afin de bloquer l'embout sur la table de retenue. Leur sécurité est également préservée dans la mesure où les opérateurs n'ont plus à intervenir pour fermer et/ou ouvrir les organes d'arrêts afin de bloquer ou libérer l'embout de connexion aval.

Par ailleurs, on comprend que selon l'invention, les organes d'arrêts demeurent agencés au sein du passage central pendant la phase d'ouverture et de fermeture. Ainsi, ils sont supportés par la table de retenue ce qui permet de faciliter leur entraînement par le dispositif d'entraînement.

En outre, le dispositif d'entraînement permet de contrôler l'amplitude du mouvement des organes d'arrêts. Ainsi, entre la position ouverte et la position fermée, l'amplitude du mouvement est telle que les organes d'arrêts n'exercent avantageusement pas d'effort de compression sur l'embout de connexion aval. Ce dernier repose sur les organes d'arrêts qui sont aptes à reprendre l'ensemble du poids de la ligne flexible. La reprise des efforts par le dispositif de retenue selon l'invention se fait donc essentiellement selon une composante axiale, la composante radiale liée à la force de réaction due au contact entre l'embout de connexion aval et les organes d'arrêts étant faible voire nulle. En découle ainsi que le dispositif de retenue selon l'invention ne tend pas à s'ouvrir sous l'effet du poids de la ligne flexible. Le dispositif de retenue est donc configuré pour reprendre des charges pouvant aller jusqu'à sept cent tonnes tout en étant avantageusement compact.

Selon l'invention, ladite table de retenue présente une pluralité de logements cylindriques radiaux débouchant dans ledit passage central dans lesquels sont agencés lesdits organes d'arrêt. Ainsi, les organes d'arrêt sont parfaitement guidés à l'intérieur des logements cylindriques radiaux.

Aussi, selon un mode de réalisation particulièrement avantageux, chacun desdits organes d'arrêt s'étend longitudinalement entre une extrémité d'appui destinée à venir en saillie dans ledit passage central et une extrémité d'entraînement opposée à ladite extrémité d'appui, ladite extrémité d'entraînement étant couplée audit ensemble d'entraînement.

Avantageusement, les ensembles d'entraînement desdits organes d'arrêt sont couplés mécaniquement ensemble. De la sorte, on vient entraîner simultanément les organes d'arrêt d'une même amplitude entre la position fermée et la position ouverte.

En outre, préférentiellement ladite table de retenue comporte deux demi-secteurs articulés l'un par rapport à l'autre. Ainsi, il est aisé de venir ouvrir la table de retenue de manière à pouvoir libérer latéralement le tronçon de ligne flexible du passage central ou à l'inverse pour pouvoir l'y emprisonner.

Préférentiellement, ledit dispositif de retenue comprend un actionneur d'ouverture configuré pour entraîner au moins l'un desdits demi-secteurs par rapport à l'autre afin de permettre l'ouverture et/ou la fermeture de ladite table de retenue. Là encore, l'intervention humaine est limitée. L'ouverture et/ou la fermeture de la table de retenue est avantageusement motorisée ce qui permet de préserver les opérateurs et également de mettre en œuvre des efforts plus importants afin de sécuriser ledit dispositif de retenue.

Aussi, ledit dispositif de retenue comprend en outre une embase présentant deux branches opposées et un espace libre entre lesdites deux branches, et ladite table de retenue est montée mobile en rotation sur ladite embase, tandis que ledit passage central s'étend à l'aplomb dudit espace libre. Ainsi, de telles caractéristiques permettent une interchangeabilité plus aisée de la table de retenue pour qu'elle puisse être adaptée à différents diamètres de ligne flexible. En effet, la table de retenue étant installée en appui sur l'embase, elle peut aisément en être retirée pour y être remplacée par une autre table de retenue. De plus, la table de retenue étant mobile en rotation, la solidarisation entre deux embouts de connexion amont et aval de ligne flexible est simplifiée.

De manière particulièrement avantageuse, lesdites deux branches opposées définissent une surface d'appui sur laquelle est appuyée ladite table de retenue. On comprend ainsi que lors de l'ouverture et/ou la fermeture de la table de retenue, celle-ci demeure supportée par l'embase et la surface d'appui facilite le mouvement d'au moins un des demi-secteurs par rapport à l'autre.

Selon encore une caractéristique particulièrement avantageuse, ladite embase comprend un élément de réglage configuré pour ajuster l'écartement desdites deux branches opposées. Ainsi, la largeur de l'espace libre compris entre les deux branches opposées peut être adaptée en fonction du diamètre de la ligne flexible. De la sorte, lorsque la table de retenue est changée pour accueillir une ligne flexible de diamètre différent, les dimensions de l'embase peuvent également être adaptées afin de recevoir en appui une table de retenue de diamètre adapté à l'embout de connexion et également d'autoriser le passage de la ligne flexible de diamètre différent au sein de l'espace libre.

En outre, ladite embase comprend au moins un actionneur pour pouvoir entraîner ladite table de retenue en rotation. Etant donné que l'embout de connexion aval repose sur ladite table de retenue, sa mise en rotation entraîne par frottement la mise en rotation de l'embout de connexion aval. Par conséquent, lors de la liaison de l'embout de connexion aval avec l'embout de connexion amont, les orifices de serrages peuvent être alignés par simple rotation de la table de retenue. Aucune manipulation lourde et dangereuse n'a ainsi à être mise en oeuvre afin de procéder à la liaison des deux embouts de connexion amont et aval.

Préférentiellement, ladite embase comprend au moins un élément d'appui configuré pour guider ladite table de retenue dans son mouvement de rotation. De la sorte, la table de retenue peut être entraînée en rotation en étant parfaitement guidée et le passage central demeure dans l'axe du puits central pendant la rotation comme on l'expliquera plus en détail dans la suite de la description.

En outre, de manière particulièrement avantageuse, ledit au moins un élément d'appui est mobile entre une position de retrait dans laquelle ledit au moins un élément d'appui est entièrement logé à l'intérieur de ladite embase pour permettre l'ouverture de ladite table de retenue et une position d'appui dans laquelle ledit au moins un élément d'appui s'étend en saillie de ladite embase de manière à coopérer avec ladite table de retenue.

Préférentiellement, le dispositif de retenue comprend un actionneur d'escamotage permettant d'entrainer ledit au moins un élément d'appui entre ladite position de retrait et ladite position d'appui. Ainsi, le guidage en rotation de la table de retenue est simplifié. Puis, lorsqu'il est nécessaire d'ouvrir la table de retenue, aucune intervention humaine n'est nécessaire puisque l'actionneur d'escamotage est apte à actionner le mouvement desdits éléments d'appui. La mise en œuvre du dispositif de retenue est ainsi simplifiée et la sécurité des opérateurs améliorée.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de côté d'un bâtiment de pose de ligne flexible ;
- la Figure 2 est une vue schématique de détail du bâtiment de pose illustré sur la Figure 1 ;
- la Figure 3 est une vue schématique en perspective de dessus de l'invention dans une première position ;
- la Figure 4 est une vue schématique de dessus de détail de l'invention représentée sur la Figure 3 ;
- la Figure 5 est une vue schématique en coupe axiale selon le plan V-V de l'objet de l'invention représenté sur la Figure 4 ;
- la Figure 6 est une vue schématique de l'invention telle que représentée sur la Figure 3, dans une seconde position ;
- la Figure 7A est une vue schématique de détail du bâtiment de pose telle que représentée sur la Figure 2 dans une autre étape de mise en oeuvre ;
- la Figure 7B est une vue schématique de détail de l'objet de la Figure 7A ;
- la Figure 8 est une vue schématique de détail du bâtiment de pose telle que représentée sur la Figure 7A dans encore une autre étape de mise en œuvre ;
- la Figure 9 est une vue schématique en coupe selon un plan médian orthogonal à l'axe A d'une variante de réalisation de l'invention et,
- la Figure 10 est une vue schématique en coupe selon un plan médian orthogonal à l'axe A d'une autre variante de réalisation de l'invention.

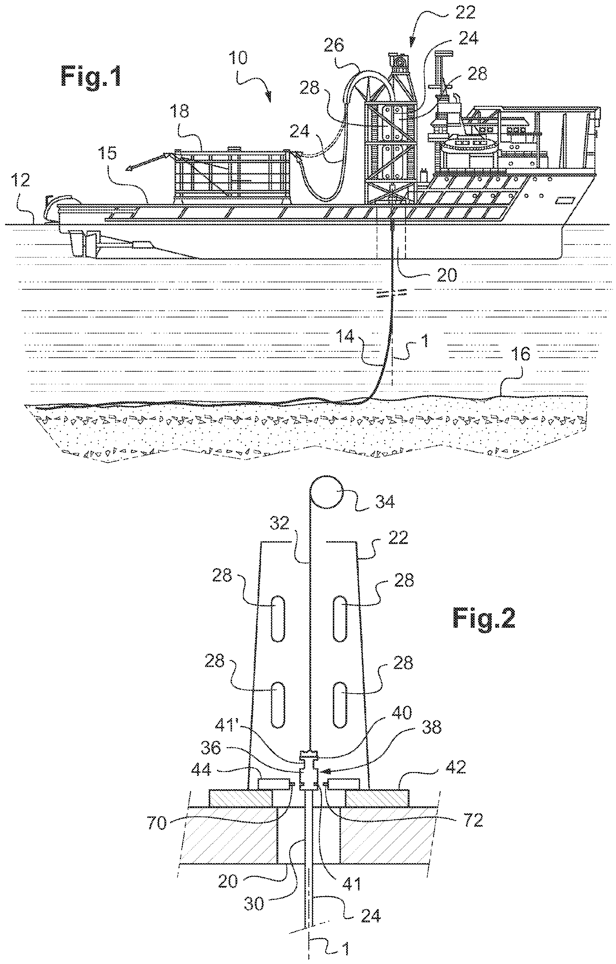

La Figure 1 illustre un bâtiment de pose 10 en situation de pose, naviguant en surface 12 d'un milieu marin. Il installe une ligne flexible 14 sous-marine sur un fond marin 16.

La ligne flexible 14 présente un axe longitudinal 1 selon lequel la ligne flexible 14 s'étend.

La ligne flexible 14 est par exemple une conduite flexible sous-marine généralement utilisée pour le transport des hydrocarbures. Une conduite flexible comprend typiquement de l'intérieur vers l'extérieur :
- une gaine interne d'étanchéité destinée à véhiculer des hydrocarbures et,
- au moins une nappe d'armures de traction constituée de fils métalliques ou composites enroulés à pas long destinée à reprendre les efforts axiaux liés au poids de la conduite.

Eventuellement, la conduite flexible sous-marine peut comprendre, outre les couches mentionnées :
- une carcasse interne agencée à l'intérieur de la gaine interne d'étanchéité et constituée d'un enroulement de feuillards métalliques à pas court destinée à reprendre les efforts radiaux d'écrasement liés à la pression hydrostatique ;
- une voûte de pression agencée autour de la gaine interne d'étanchéité constituée d'un enroulement de fils métalliques à pas court destinée à reprendre les efforts radiaux liés à la pression interne et,
- une gaine externe d'étanchéité permettant de prévenir l'infiltration de l'eau environnante au sein de la conduite flexible sous-marine.

Lorsque la conduite flexible sous-marine comprend une carcasse interne, elle est dîtes à passage non lisse (« rough bore » en langue anglaise) et lorsqu'elle ne comprend pas de carcasse interne, elle est dîtes à passage lisse (« smooth bore » en langue anglaise).

L'enroulement à pas long désigne des angles d'hélice compris entre 20° et 60° par rapport à l'axe de la conduite. L'enroulement à pas court désigne des angles d'hélice proches de 90° par rapport à l'axe de la conduite.

Une telle conduite flexible est notamment décrite dans les documents normatifs API RP 17B « Recommended Practice for Flexible Pipe» (5^{ème} édition-Mars 2014) et API 17J « Spécification for Unbonded Flexible Pipe» (4^{ème} édition-Mai 2014), publiés par l'American Petroleum Institute (API).

Alternativement, la ligne flexible 14 peut être un ombilical destiné au transport de fluides et/ou à la transmission d'énergie et/ou d'information aux équipements sous-marin de type vanne, collecteur, pompe ou tout autre équipement nécessitant d'être alimenté en énergie dans le cadre de leur fonctionnement. De manière générale, un ombilical comprend un agencement d'une pluralité de câbles électriques et/ou câbles de données et/ou de conduites de faible diamètre pour le transport de fluide pour faciliter l'écoulement des hydrocarbures au sein des conduites flexibles ou pour renforcer les conduites contre le phénomène de corrosion par exemple.

Les ombilicaux sont notamment décrits au sein du document normatif API 17E « Spécification for Subsea Umbilicals » (4ème édition-Avril 2011) publié par l'American Petroleum Institute (API).

Dans encore un autre mode de réalisation, la ligne flexible 14 peut être une combinaison d'une conduite flexible et d'un ombilical. De telles conduites sont généralement appelées IPB (pour « Integrated Production Bundle » en langue anglaise). De telles conduites combinent ainsi les propriétés d'une conduite flexible et les caractéristiques d'un ombilical.

Typiquement, la ligne flexible 14 comprend plusieurs tronçons raccordés par l'intermédiaire d'embouts de connexion durant l'installation de la ligne flexible 14 telle que décrit ci-après.

Pour procéder à l'installation, le bâtiment de pose 10 présente un pont 15 sur lequel repose des tronçons de ligne flexible stockés dans des paniers 18, et ces tronçons de ligne flexible sont successivement raccordés bout-à-bout et dévidés à travers un puits central 20 ménagé à travers le pont 15 du bâtiment de pose 10. Le puits central 20 est alors surmonté d'une tour 22 permettant, non seulement le guidage contrôlé des tronçons de ligne flexible, mais aussi la reprise des efforts de traction exercés par la ligne flexible 14 partiellement immergée.

Ainsi, un tronçon 24 de ligne flexible 14 s'étend du panier 18 dans lequel il est initialement stocké vers une gouttière de guidage en arc 26 surmontant la tour 22. Le tronçon 24 s'étend alors verticalement à l'intérieur de la tour 22 et des trains de chenilles latéraux 28 permettent, d'une part, de maintenir verticalement le tronçon 24 et, d'autre part, de l'entraîner en translation vers le puits central 20 afin de l'immerger.

Comme illustré plus en détail sur la Figure 2, le tronçon 24 est alors dévidé jusqu'à son extrémité aval 30 que l'on retient au moyen d'un câble de retenue 32 et d'un treuil 34 installé au sommet de la tour 22. Plus particulièrement, l'extrémité aval 30 du tronçon 24 est équipée d'un embout de connexion aval 36 auquel est fixée une tête de traction par l'intermédiaire de laquelle l'embout de connexion aval 36 est relié au câble de retenue 32. L'embout de connexion aval 36 est rigide, et est usuellement réalisé en acier. Le diamètre extérieur de l'embout de connexion aval 36 est généralement compris entre 210 mm et 1200 mm. Il présente une partie arrière 38 formant manchon, dans laquelle est emmanchée l'extrémité aval 30 du tronçon 24, et une partie avant 40 formant collerette et destinée à être reliée à un embout de connexion amont 156 d'un tronçon suivant 157. La partie avant 40 formant collerette définit un premier épaulement 41', tandis que la partie arrière 38 forme un second épaulement 41. Plus précisément, l'épaulement 41 s'étend radialement par rapport à l'axe longitudinal 1 de la ligne flexible 14.

Aussi, afin d'établir cette liaison entre l'embout de connexion aval 36 et l'embout de connexion amont 156 d'un tronçon suivant 157, le câble de retenu 32 doit tout d'abord être déconnecté de la tête de traction. Ensuite, le tronçon suivant 157 équipé de l'embout de connexion amont 156 est amené au voisinage de l'embout de connexion aval 36 du tronçon 24 par l'intermédiaire des trains de chenilles latéraux 28. Pour ce faire, il est nécessaire de retenir et d'immobiliser l'extrémité aval 30 du tronçon 24 par l'intermédiaire de l'embout de connexion aval 36 sur le pont du bâtiment de pose 10. Pour cela, un dispositif de retenue comprenant une table de retenue 44 présentant un passage central 66 au travers duquel est destiné à s'étendre la ligne flexible 14 est installé sur le pont 15 au-dessus du puits central 20 et sous la tour 22.

Préférentiellement, la table de retenue 44 est agencée sur une embase 42. L'embase 42 présente par exemple une forme en U.

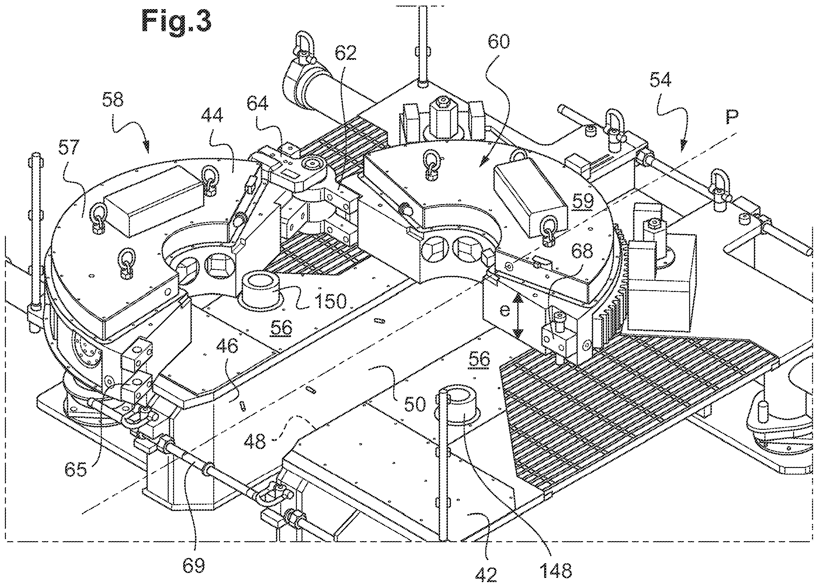

On décrira en détail sur les Figures 3 et suivantes, l'embase 42 et la table de retenue 44.

L'embase 42 présente deux branches opposées 46, 48 et un espace libre 50 entre les deux branches 46,48. Le passage central 66 s'étend ainsi à l'aplomb de l'espace libre 50.

L'embase 42 est installée sur le pont 15 du bâtiment de pose 10 de telle manière que l'espace libre 50 s'étende au-dessus du puits central 20 du bâtiment de pose 10. Dans l'exemple représenté sur la figure 3, l'embase 42 s'étend selon une direction principale P.

En outre, l'embase 42 présente une première extrémité 52 opposée à une deuxième extrémité de fond 54.

Préférentiellement, l'embase 42 comprend également un élément de réglage configuré pour ajuster l'écartement des branches opposées 46, 48. Par exemple, la deuxième extrémité de fond 54 peut comprendre des vérins d'actionnement permettant de régler la distance relative des deux branches 46, 48, tandis que la première extrémité 52 peut comporter une tige de maintien à distance 69. Les deux branches opposées 46, 48 peuvent être ainsi réglées à distance l'une de l'autre afin de moduler la largeur de l'espace libre 50 en fonction des différents diamètres d'embout de connexion aval 36 et de recevoir en appui des tables de retenue 44 de dimension supérieure ou inférieure en fonction des différents diamètres d'embouts de connexion aval 36.

Aussi, les deux branches opposées 46, 48 définissent une surface d'appui 56 sur laquelle est appuyée la table de retenue 44. Cette dernière présente une épaisseur e et elle comporte deux demi-secteurs, un premier 58 et un second 60. Les deux demi-secteurs 58, 60 sont chacun équipé d'un carter de protection 57, 59. On expliquera ci-après, les éléments qu'ils abritent.

En outre, les deux demi-secteurs 58, 60 sont montés articulés l'un par rapport à l'autre afin de permettre l'ouverture et/ou la fermeture de la table de retenue 44.

Par exemple et comme représenté sur la figure 3, le dispositif de retenue peut comprendre une charnière 62 autour de laquelle au moins l'un des demi-secteurs 58, 60 est apte à pivoter.

Dans un autre exemple de réalisation non représenté, les demi-secteurs 58, 60 sont mobiles en translation. Le dispositif de retenue peut alors comprendre des rails sur lesquels est monté au moins l'un des demi-secteurs 58, 60 afin de permettre un mouvement en translation d'au moins l'un des demi-secteurs 58, 60 par rapport à l'autre de manière à ouvrir et/ou fermer la table de retenue 44.

En outre, afin de simplifier cette opération d'ouverture et/ou de fermeture de la table de retenue 44, le dispositif de retenue comprend préférentiellement un actionneur d'ouverture 64 configuré pour entraîner au moins l'un des demi-secteurs 58, 60 par rapport à l'autre.

Par exemple, l'actionneur d'ouverture 64 est composé d'un groupe moteur pouvant être un moteur électrique, pneumatique ou hydraulique ou un vérin électrique, pneumatique ou hydraulique. L'actionneur d'ouverture 64 peut également être composé d'une clé à couple hydraulique ou tout autre actionneur convenant à l'homme du métier. Compte tenu des efforts mis en jeu, on préférera cependant un actionneur d'ouverture 64 alimenté en énergie hydraulique.

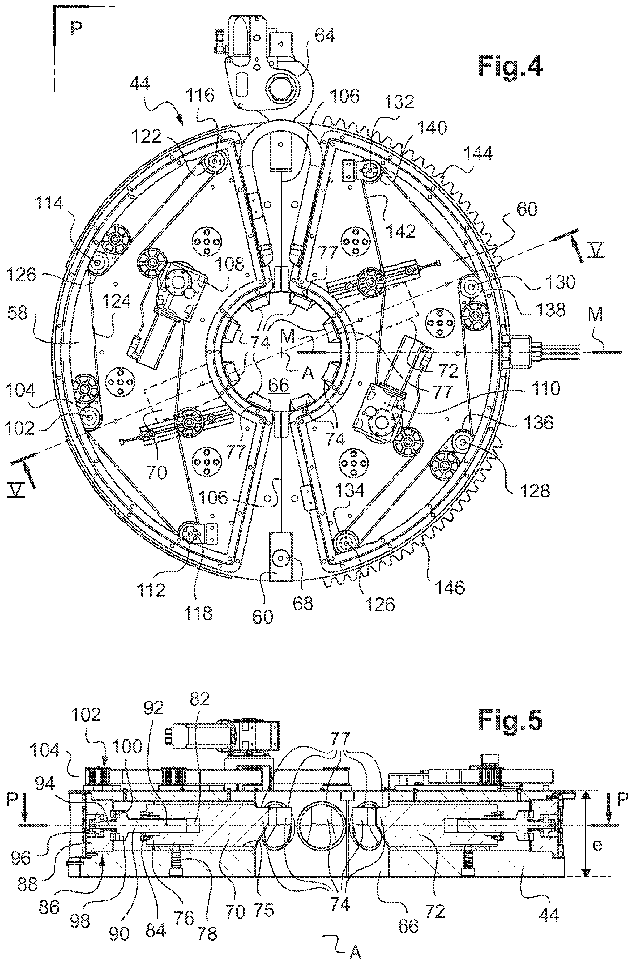

L'actionneur 64 permet ainsi d'entraîner le premier demi-secteur 58 vers le second 60 pour former un ensemble circulaire comme illustré sur la Figure 4.

Le dispositif de retenue peut également comprendre un système de détection, déporté ou intégré de type capteur capacitif, inductif, électromécanique ou tout autre moyen de détection adapté à la présente application assurant que les demi-secteurs 58, 60 sont bien solidaires l'un de l'autre.

Par ailleurs, le dispositif de retenue peut comprendre un ensemble de verrouillage permettant de solidariser les demi-secteurs 58, 60. Par exemple, et comme mieux représenté sur la figure 3, on observera qu'à l'opposé de la charnière 62, le premier demi-secteur 58 présente un premier élément de verrouillage 65, tandis que le second demi-secteur 60 présente un second élément de verrouillage 68. Chacun des éléments de verrouillage 65, 68 comprend une face inférieure et supérieure dans lesquelles au moins un orifice est formé. Ainsi, lorsque les éléments de verrouillage 65, 68 coopèrent ensemble, une tige est alors agencée au sein des orifices afin de maintenir les éléments de verrouillage 65, 68 en prise.

Selon un autre mode de mise en œuvre non représenté, l'élément de verrouillage 65 comprend au moins un organe de blocage escamotable sous l'effet d'une pression. L'organe de blocage escamotable est configuré pour coopérer avec l'élément de verrouillage 68 par l'intermédiaire de logements ménagés au sein de l'élément de verrouillage 68 destinés à recevoir ledit organe de blocage. Préférentiellement, l'organe de blocage est maintenu en position au sein du logement par l'intermédiaire d'un ressort. L'organe de blocage est désolidarisé du second élément de verrouillage 68 par l'intermédiaire d'un poussoir aménagé au sein dudit logement. Avantageusement, le poussoir peut être actionné par un actionneur afin de faciliter le déverrouillage des deux demi-secteurs 58, 60.

Selon encore un autre mode de mise en œuvre, l'ensemble de verrouillage peut comprendre un crochet de fermeture ou tout autre moyen destiné à solidariser les demi-secteurs 58, 60 et adapté à la présente invention.

Par ailleurs, on retrouve sur la Figure 4 les deux demi-secteurs 58, 60 débarrassés de leur carter de protection 57, 59 pour faire apparaître les détails du dispositif de retenue, et réunis ensemble pour former la table de retenue 44 en faisant apparaître le passage central 66.

Le passage central 66 est sensiblement cylindrique et il s'étend selon une composante axiale A. Il pourrait être sensiblement conique ou bien d'une tout autre forme. On observera que les premier et second éléments de verrouillage 65, 68 sont en prise l'un dans l'autre pour que les deux demi-secteurs 58, 60 forment un ensemble rigide. La table de retenue 44 s'étend alors selon un plan moyen Pm parallèle au plan de la Figure 4. On observera que les dimensions de la table de retenue 44 et partant, du passage central 66, sont adaptées aux dimensions de l'embout de connexion aval 36 et en particulier à son diamètre extérieur. Aussi, on fournit par exemple un jeu de cinq tables de retenue 44 permettant de s'adapter par palier à des diamètres d'embout de connexion aval 36 compris entre 200 mm à 1200 mm. Par exemple, on prévoit une première table de retenue 44 pour les diamètres d'embout de connexion aval 36 compris entre 200 mm et 450 mm, une deuxième table de retenue 44 pour les diamètres d'embout de connexion aval 36 compris entre 400 mm et 650 mm, une troisième pour les diamètres d'embout de connexion aval 36 compris entre 600 mm et 850 mm, une quatrième pour les diamètres d'embout de connexion aval 36 compris entre 850 mm et 1050 mm, et une cinquième pour les diamètres d'embout de connexion aval 36 compris entre 1000 mm et 1200 mm. En fonction des dimensions de la table de retenue 44, les dimensions de l'embase 42 et notamment l'écartement des branches opposées 46, 48 sont réglées par l'intermédiaire des éléments de réglage.

En outre, le dispositif de retenue selon l'invention comprend une pluralité d'organes d'arrêt 70, 72 agencés autour du passage central 66 et mobiles entre une position ouverte où ils sont écartés les uns des autres et une position fermée où ils sont rapprochés les uns des autres.

Selon la présente invention, il est entendu par position ouverte, que les organes d'arrêts 70, 72 sont dans une position rétractée autorisant éventuellement le passage de la ligne flexible 14 tandis que la position fermée traduit une position dans laquelle les organes d'arrêts 70, 72 obstruent partiellement le passage central 66 afin de retenir la ligne flexible 14 par le biais de l'embout de connexion aval 36 et plus particulièrement de l'épaulement 41.

Comme on l'expliquera ci-après, une pluralité d'organes d'arrêt 70, 72 peut comprendre deux organes d'arrêt au plus. Selon un mode de mise en œuvre non représenté, la table de retenue 44 comprend avantageusement deux seuls organes d'arrêt 70, 72, diamétralement opposés.

Par exemple, la figure 5, présentant, selon une vue de coupe selon le plan V-V passant par l'axe A représenté sur la Figure 4, la table de retenue 44, illustre le passage central 66 s'étendant selon la composante axiale A, et à l'intérieur de la table de retenue 44 selon le plan de coupe, deux organes d'arrêt diamétralement opposés, un premier 70 et un second 72. Le premier organe d'arrêt 70 est situé à l'intérieur du premier demi-secteur 58, tandis que le second 72 est situé à l'intérieur du second demi-secteur 60. On décrira en détail celui du premier demi-secteur 58 et son mode de fonctionnement. Il est toutefois totalement identique à celui du second demi-secteur 60.

Préférentiellement, chacun des organes d'arrêt 70, 72 présente une portée d'appui 77 sur laquelle l'épaulement 41 de l'embout de connexion aval 36 est destiné à reposer lorsque les organes d'arrêts 70, 72 sont en position fermée de manière à retenir l'embout de connexion aval 36 à travers le passage central 66.

Au sens de la présente invention, il est entendu par reposer, que les organes d'arrêts n'exercent pas d'effort radial sur l'embout de connexion aval 36 afin de le maintenir en position. Ainsi, le dispositif de retenue selon la présente invention est configuré pour préserver l'intégrité de l'embout de connexion aval 36.

Aussi, la portée d'appui 77 est préférentiellement orientée perpendiculairement à la composante axiale A.

Préférentiellement, l'organe d'arrêt 70 présente une extrémité d'appui 74 s'étendant en saillie dans le passage central 66 sur laquelle est aménagée la portée d'appui 77.

L'extrémité d'appui 74 est de manière préférée prismatique et peut être rapportée ou bien directement usinée voire moulée sur l'organe d'arrêt 70. Lorsque l'extrémité d'appui 74 est rapportée, elle est soudée, vissée ou solidarisée par tout moyen de connexion adapté à la présente application à l'organe d'arrêt 70. Elle peut également prendre toute autre forme adaptée à remplir la fonction d'appui, par exemple l'extrémité d'appui 74 peut être du type conique comprenant un méplat ou peut être biseautée.

En outre, de manière préférée, la table de retenue 44 présente une pluralité de logements cylindriques radiaux 75 débouchant dans le passage central 66 et dans lesquels sont agencés les organes d'arrêts 70, 72.

Ainsi, et comme représenté sur la figure 5, le premier organe d'arrêt 70 s'étend longitudinalement à l'intérieur d'un logement cylindrique radial 75 débouchant, vers l'intérieur de la table de retenue 44, dans le passage central 66, et à l'opposé vers l'extérieur en dehors de la table de retenue 44.

On observera que la longueur de l'organe d'arrêt 70 est sensiblement égale aux deux tiers de la longueur totale du logement cylindrique radial 75. Plus particulièrement, la longueur de l'organe d'arrêt 70 est avantageusement comprise entre 250 mm et 600 mm, la longueur de l'extrémité d'appui 74 étant généralement compris entre 25 mm et 75 mm.

De plus, avantageusement, le logement cylindrique radial 75 est à courbe directrice circulaire, tout comme l'organe d'arrêt 70. Le logement cylindrique radial 75 est avantageusement lubrifié pour minimiser les frottements lors du guidage de l'organe d'arrêt 70 entre la position ouverte et la position fermée. Le logement cylindrique radial 75 peut aussi comprendre des coussinets frittés, des coussinets autolubrifiants en composite ou polyamide ou encore des douilles afin de minimiser les frottements. Par ailleurs, le logement cylindrique radial 75 peut comprendre un revêtement polymérique ainsi que des joints d'étanchéité afin de minimiser les risques de contamination liés par exemple à l'environnement marin ou aux équipements voisins. Un revêtement anticorrosion de type époxy ou polyester ou tout autre matériau adapté à la présente application peut également être prévu.

En outre, le dispositif de retenue comprend au moins un ensemble d'entraînement 86 configuré pour entraîner les organes d'arrêt 70, 72 entre la position ouverte et la position fermée.

Dans une première variante de réalisation de l'entraînement, l'ensemble d'entraînement 86 est configuré pour entraîner les organes d'arrêt 70, 72 en translation entre la position ouverte et la position fermée.

Selon l'invention, les organes d'arrêt 70, 72 sont mobiles en translation selon des directions radiales autour du passage central 66, et parallèlement au plan moyen Pm de la table de retenue 44. Ainsi, dans un premier exemple de réalisation de l'ensemble d'entrainement 86 représenté sur la figure 5, chacun des organes d'arrêt 70, 72 s'étend longitudinalement entre l'extrémité d'appui 74 destinée à venir en saillie dans le passage central 66 et une extrémité d'entraînement 76 opposée à l'extrémité d'appui 74, l'extrémité d'entraînement 76 étant couplée à l'ensemble d'entrainement 86. On comprend alors que selon un mode préféré de l'invention, le dispositif de retenue comprend une pluralité de dispositif d'entraînement de sorte que chaque extrémité d'entraînement 76 soit couplée à un ensemble d'entraînement 86.

Ainsi, l'ensemble d'entraînement 86 coopère avec l'extrémité d'entraînement 76 de l'organe d'arrêt 70 et entraîne ce dernier en translation par un système de vis sans fin par exemple. A cette fin, l'organe d'arrêt 70 présente un perçage axial borgne 82 débouchant de l'extrémité d'entraînement 76 à l'opposé de l'extrémité d'appui 74. Le perçage axial borgne 82, est équipé à l'entrée d'une couronne 84 taraudée à l'intérieur et maintenue en position fixe par rapport à l'organe d'arrêt 70. La couronne 84 est montée coaxialement au perçage axial borgne 82. Selon une autre variante de réalisation, plus simple et non représentée, le perçage axial borgne 82 présente une entrée taraudée et un chambrage dans le prolongement.

Selon ce premier exemple de réalisation, l'ensemble d'entraînement 86 comprend en outre un boîtier de renvoi 88 venant refermer le logement cylindrique radial 75 vers l'extérieur. L'ensemble d'entraînement 86 comprend un arbre radial 90 installé radialement à l'intérieur du logement cylindrique radial 75. L'arbre radial 90 présente une extrémité d'entraînement filetée 92 venant en prise à l'intérieur de la couronne 84 et s'étendant au moins partiellement à l'intérieur du perçage axial borgne 82. L'extrémité d'entraînement fileté 92 présente des filets à profil trapézoïdale pour pouvoir subir des efforts importants. L'arbre radiale 90 présente, à l'opposé de l'extrémité d'entraînement filetée 92, une extrémité entraînée 94 montée à l'intérieur du boîtier 88 et équipée d'une roue dentée 96. En outre, l'arbre radial 90 présente entre les deux extrémités 92, 94, un collet 98 installé en appui contre le boîtier 88 par l'intermédiaire d'une butée à bille ou à aiguilles 100. Le boîtier de renvoi 88 permet ainsi de reprendre les efforts de résistance au mouvement de translation de l'organe d'arrêt 70.

Par ailleurs, l'ensemble d'entraînement 86 comprend un premier arbre axial 102 s'étendant partiellement à travers la table de retenue 44 et sensiblement perpendiculairement au plan moyen Pm à la périphérie de la table de retenue 44. Il présente une partie filetée s'étendant à l'intérieur du boîtier de renvoi 88 et engrenant la roue dentée 96, et une partie opposée venant s'étendre en saillie de la table de retenue 44. Cette partie opposée est équipée d'une roue dentée 104 s'étendant en saillie de la table de retenue 44.

On comprend alors que l'entraînement en rotation du premier arbre axial 102 par l'intermédiaire de la roue dentée 104, va permettre d'entraîner en rotation la roue dentée 96 située à l'intérieur du boîtier de renvoi 88 et partant, l'arbre radial 90. Son extrémité d'entraînement fileté 92 venant en prise dans la couronne 84, l'organe d'arrêt 70 est alors entraîné en translation à l'intérieur du logement cylindrique radial 75. Lorsque le premier arbre axial 102 est entraîné en rotation dans un sens, l'organe d'arrêt 70 est entraîné en translation vers le passage central 66, et l'extrémité d'appui 74 se rapproche du centre de ce passage central 66. À l'inverse, lorsque le premier arbre axial 102 est entraîné en rotation dans un sens opposé, l'organe d'arrêt 70 rentre vers l'intérieur du logement cylindrique radial 75 et l'extrémité d'appui 74 se rétracte.

Avantageusement, le dispositif de retenue comprend un élément d'arrêt en rotation. Par exemple, la table de retenue 44 présente un doigt d'indexation 78 venant s'étendre dans le logement cylindrique radial 75, tandis que l'organe d'arrêt 70 présente une rainure axiale de guidage 80 pour recevoir précisément le doigt d'indexation 78. De la sorte, l'organe d'arrêt 70 est mobile en translation à l'intérieur du logement cylindrique radial 75, autrement dit, l'organe d'arrêt 70 est monté à coulissement à l'intérieur du logement cylindrique radial 75, et il y est bloqué en rotation grâce à la coopération du doigt d'indexation 78 et de la rainure axiale de guidage 80. De la sorte, l'orientation spécifique de l'extrémité d'appui 74 est conservée durant la course de l'organe d'arrêt 70, c'est-à-dire que la surface de l'extrémité d'appui 74 demeure sensiblement perpendiculaire à la composante axiale A.

Ce blocage en rotation de l'organe d'arrêt peut également être obtenu par l'intermédiaire d'un logement cylindrique de section droite non circulaire par exemple de section ovale, carrée, hexagonale, triangulaire, circulaire avec un méplat ou tout autre type de géométrie non circulaire et d'un organe d'arrêt de section identique au jeu fonctionnel près.

L'ensemble d'entraînement 86 pour entraîner le premier organe d'arrêt 70 est non seulement reproduit à l'opposé afin de pouvoir entraîner en translation le second organe d'arrêt 72, mais également à l'arrière de tous les autres organes d'arrêt installés radialement autour du passage central 66 et dont on aperçoit des extrémités d'appui 74 en partie sur la Figure 5, mais aussi sur la Figure 4.

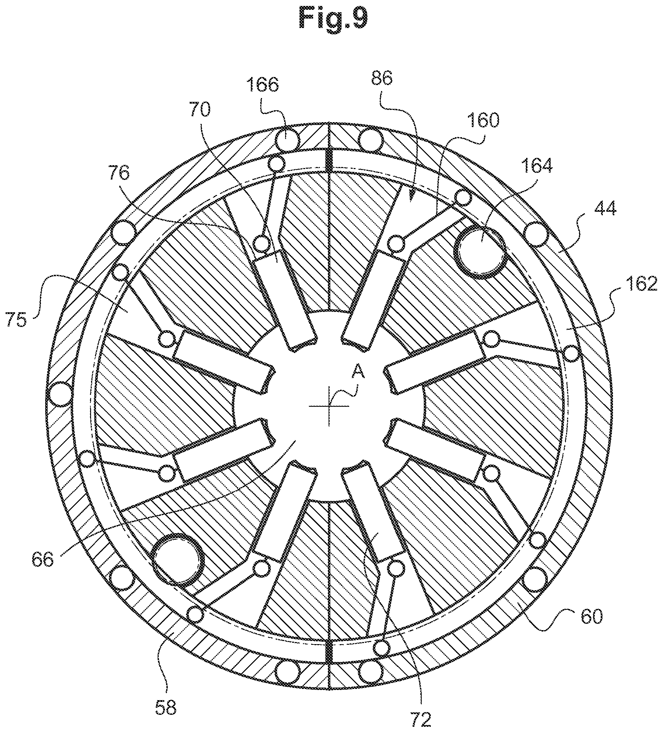

Dans un deuxième exemple de réalisation de l'ensemble d'entraînement 86 représenté sur la figure 9, l'ensemble d'entraînement 86 comprend une bielle 160 agencée au sein du logement cylindrique radial 75. La bielle 160 coopère par le biais d'une liaison pivot, d'une part, avec l'extrémité d'entraînement 76 et d'autre part, avec une couronne mécanique 162 agencée au sein de la table de retenue 44. Une roue dentée 164 entraîne en rotation la couronne mécanique 162 afin d'entraîner en translation la bielle 160, et partant, l'organe d'arrêt 70. La couronne mécanique 162 est par ailleurs guidée en rotation par des galets 166.

Préférentiellement, et à l'image du premier exemple de réalisation, chaque organe d'arrêt 70, 72 coopère avec un ensemble d'entraînement 86. Ainsi, chaque organe d'arrêt 70, 72 coopère avec une bielle 160, chaque bielle étant reliée à la couronne mécanique 162.

Dans un troisième exemple de réalisation non représenté de l'ensemble d'entrainement 86, l'ensemble d'entraînement 86 comprend un couple pignon, crémaillère configuré pour entraîner en translation l'organe d'arrêt 70 entre la position ouverte et la position fermée. Selon ce troisième exemple de réalisation, la crémaillère est agencée le long de la surface externe de l'organe d'arrêt 70 et est destinée à coopérer avec le pignon qui, lorsqu'il est entraîné en rotation, entraîne la crémaillère et, partant, l'organe d'arrêt 70 en translation. Préférentiellement, et à l'image des exemples de réalisation précédents, chaque organe d'arrêt 70, 72 coopère avec un ensemble d'entraînement 86.

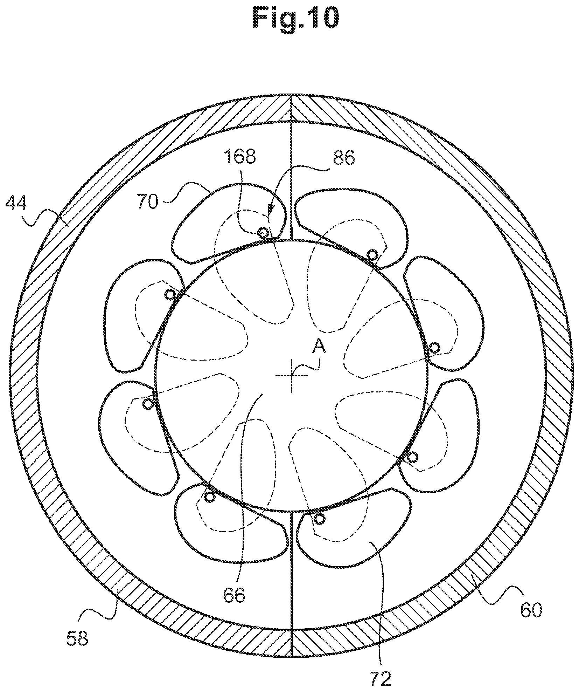

Selon une seconde variante de réalisation de l'entraînement représentée sur la figure 10, l'ensemble d'entraînement 86 est configuré pour entraîner les organes d'arrêt 70, 72 en rotation entre la position ouverte et la position fermée. Par exemple, l'ensemble d'entraînement 86 comprend un axe 168 autour duquel l'organe d'arrêt 70 peut pivoter. La géométrie de l'organe d'arrêt est avantageusement de type excentrique afin de pouvoir adapter la longueur de l'extrémité d'appui 74. Préférentiellement, et à l'image de la première variante de réalisation, chaque organe d'arrêt 70, 72 coopère avec un ensemble d'entraînement 86.

Ainsi sur la Figure 4, apparaissent en traits interrompus, la position des premier 70 et second 72 organes d'arrêt diamétralement opposés et leur extrémité d'appui 74. En outre, apparaissent sur la Figure 4, six autres extrémités d'appui 74 uniformément réparties autour du passage central 66 et respectivement situées dans le prolongement d'organes d'appui correspondant. Ainsi, les deux demi-secteurs 58, 60 sont sensiblement symétriques l'un de l'autre par rapport à leur plan de joint 106 et ils comprennent chacun quatre organes d'arrêt, mus par un ensemble d'entraînement 86.

Apparaissent également en traits interrompus sur la Figure 10, les organes d'arrêts 70, 72 dans la position fermée.

Par ailleurs, les ensembles d'entraînement 86 sont préférentiellement couplés mécaniquement ensemble.

Par exemple, dans le cadre d'un ensemble d'entraînement par vis sans fin tel que précédemment décrit, les premiers organes d'arrêt 70 sont couplés à un même premier servomoteur 108 équipé d'une première roue dentée motrice, tandis que les seconds organes d'arrêt 72 du second demi-secteur 60 sont couplés à un même second servomoteur 110 équipé d'une seconde roue dentée motrice.

Ainsi, s'agissant du premier demi-secteur 58, on retrouve, sur la Figure 4, le premier arbre axial 102 équipé de la roue dentée 104 permettant d'entraîner en translation l'un des premiers organes d'arrêt 70. Ce premier demi-secteur 58 comprend trois autres premiers organes d'arrêt aptes à être entraînés en translation par l'intermédiaire de trois autres premiers arbres axiaux 112, 114, 116 respectivement équipés de trois autres roue dentée 118, 120, 122. Afin de pouvoir entraîner simultanément les quatre premières roues dentés 104, 118, 120, 122 elles sont couplées en rotation à la première roue dentée motrice du premier servomoteur 108 grâce à une même première courroie crantée 124, guidée et tendue par des poulies de renvoi.

De la même façon, le second demi-secteur 60, comprend trois autres seconds organes d'arrêt. Les quatre seconds organes d'arrêt sont aptes à être entraînés en translation par l'intermédiaire de quatre seconds arbres axiaux 126, 128, 130, 132 respectivement équipés de quatre roues dentées 134, 136, 138, 140. Afin de pouvoir entraîner simultanément les quatre roues dentées 134, 136, 138, 140, elles sont couplées à la seconde roue dentée motrice du second servomoteur 110 au moyen d'une seconde courroie crantée 142.

S'agissant des courroies crantées 124, 142, on peut également mettre en œuvre une courroie trapézoïdale et partant, les galets d'entraînement dentés sont remplacés par des poulies à gorge ou une courroie de type plate ou tout autre type de courroie bien connue de l'homme du métier et adaptée à la présente application.

De surcroît, les organes moteurs sont commandés par un même boîtier de commande pour pouvoir synchroniser également le mouvement des premiers organes d'arrêt 70 et des seconds organes d'arrêt 72. Aussi, interviennent également, des éléments de dialogue pouvant être du type filaire ou non filaire ; un éventuel pupitre dans le cas d'une commande manuelle ; un processeur ; et, un programme informatique permettant la synchronisation des mouvements des organes d'arrêt 70, 72.

Dans le cas d'un entraînement 86 par bielle 160, le couplage mécanique est avantageusement réalisé par le biais de la couronne mécanique 162.

On comprend aussi que le couplage des ensemble d'entraînement 86 des organes d'arrêts 70, 72 est réalisé par demi-secteur 58, 60. Bien sûr, il peut être envisagé une synchronisation globale des ensembles d'entraînement 86.

Alternativement, chaque ensemble d'entraînement 86 est indépendant c'est-à-dire qu'il ne bénéficie pas de couplage mécanique. Dans un tel mode de réalisation, la synchronisation des ensembles d'entraînement 86 est réalisée par le biais d'un automate qui aura pour rôle de commander et synchroniser chaque ensemble d'entraînement 86.

On comprend ainsi que les huit organes d'arrêt 70, 72 vont pouvoir être commandés simultanément de manière à ce que lesdites portées d'appui 77 viennent s'étendre en saillie à l'intérieur du passage central 66, et de façon à venir former une surface d'appui générale interrompue circulaire. L'épaulement 41 de la partie arrière 38 de l'embout de connexion aval 36 pourra alors venir s'appuyer sur la surface d'appui circulaire.

Bien évidemment, l'invention n'est nullement limitée à la mise en œuvre de huit organes d'arrêt 70, 72. Outre la possibilité de mettre en œuvre deux seuls organes d'arrêt 70, 72, il est également possible d'en mettre en œuvre par exemple quatorze.

Le dispositif de retenue peut avantageusement comprendre un système de détection, déporté ou intégré de type capteur capacitif, inductif, électromécanique ou tout autre moyen de détection adapté à la présente application permettant de contrôler la position des organes d'arrêts 70, 72.

Avant de décrire en détail le mode de coopération de la table de retenue 44 telle qu'illustrée sur la Figure 4, et l'embase 42, on notera que la table de retenue 44 est montée mobile en rotation sur l'embase 42.

Par exemple, et comme illustré, on observera que le second demi-secteur 60 présente sur sa périphérie deux segments circulaires crantés 144, 146 symétriques l'un de l'autre par rapport au plan médian M.

Ces deux segments circulaires crantés 144, 146 sont par exemple usinés directement sur la périphérie des demi-secteurs 58, 60 ou alors peuvent être constitués par une pièce rapportée et solidarisée aux demi-secteurs 58, 60 par vissage ou soudage par exemple. Par ailleurs, selon une autre alternative, on prévoit de mettre en œuvre un seul segment circulaire cranté 144, 146.

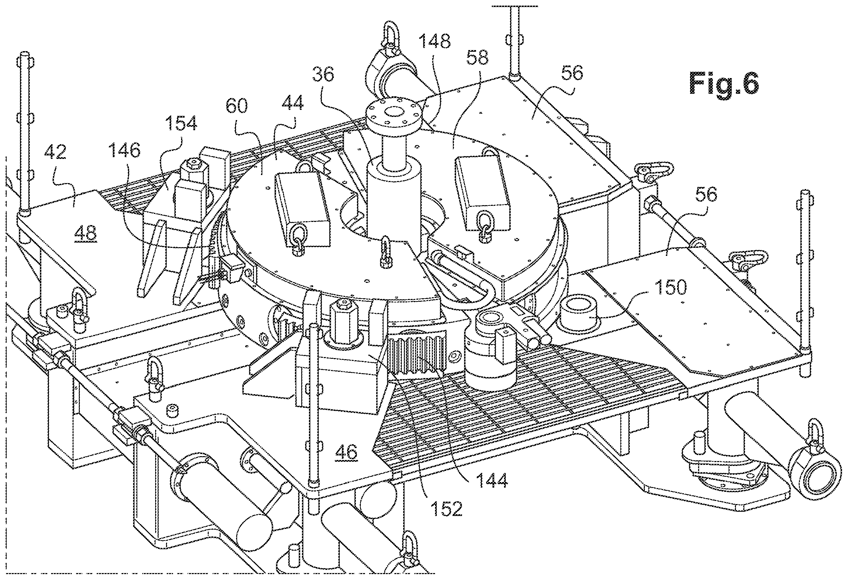

On se reportera à présent sur la Figure 6, montrant l'embase 42 et la table de retenue 44 qui la supporte, selon un angle de vue diamétralement opposé à celui sous l'angle duquel elles sont montrées sur la Figure 3. De surcroît, les deux demi-secteurs 58, 60 sont réunis pour former la table de retenue 44 circulaire, et aussi, l'embout de connexion aval 36 vient s'étendre à l'intérieur du passage central 66.

De manière préférée, l'embase 42 comprend au moins un actionneur pour pouvoir entrainer la table de retenue 44 en rotation. Dans l'exemple représenté sur la figure 6, le dispositif comprend avantageusement deux actionneurs 152, 154 qui coopèrent avec les deux segments circulaires crantés 144, 146.

Les actionneurs 152, 154 sont respectivement installés sur les deux branches opposées 46, 48 et coopérèrent avec les segments circulaires crantés 144, 146.

De la sorte, la table de retenue 44 peut être entraînée en rotation autour de son axe de symétrie, sur une amplitude de quelques dizaines de degrés par le biais des actionneurs 152, 154. Ces actionneurs 152, 154 sont naturellement synchronisés.

En outre, l'embase 42 comprend au moins un élément d'appui 148, 150 configuré pour guider la table de retenue 44 dans son mouvement de rotation.

Préférentiellement, l'élément d'appui 148, 150 est mobile entre une position de retrait dans laquelle l'élément d'appui 148, 150 est entièrement logé à l'intérieur de l'embase 42 pour permettre l'ouverture de la table de retenue 44 et une position d'appui dans laquelle l'élément d'appui 148, 150 s'étend en saillie de l'embase 42 de manière à coopérer avec la table de retenue 44.

L'embase 42 comprend préférentiellement deux éléments d'appui 148, 150 montés libres en rotation sur chacune des branches opposées 46, 48 de l'embase 42 à l'opposé dudit au moins un actionneur 152, 154 et symétriques par rapport à l'espace libre 50. Les éléments d'appui sont par exemple des galets.

Ainsi, lorsque la table de retenue 44 est entrainée en rotation, son axe de symétrie demeure précisément dans une position fixe grâce aux éléments d'appui 148, 150 qui la retiennent.

Préférentiellement, le dispositif comprend en outre un actionneur d'escamotage permettant d'entrainer les éléments d'appui 148, 150 entre la position de retrait et la position d'appui. L'actionneur d'escamotage est par exemple un vérin de type hydraulique, électrique ou pneumatique voire un moteur de type pas à pas couplé à un moyen de transformation du mouvement de rotation en mouvement de translation ou de tout autre type adapté à la présente application. L'actionneur permet ainsi de faciliter l'escamotage des éléments d'appui 148, 150 lorsque la table de retenue 44 nécessite d'être entrainée en rotation.

De surcroît, au moins une partie de la surface d'appui 56 des deux branches opposées 46, 48 est, selon un mode de mise en œuvre de l'invention, recouverte d'un revêtement anti-adhérent pour faciliter le mouvement du premier demi-secteur 58 lorsqu'il est entraîné pour rejoindre le second demi-secteur 60. Le revêtement anti-adhérent comprend par exemple un polymère tel qu'un thermoplastique du type polyamide 6/6 (PA66) chargée de particules pouvant être du bisulfure de molybdène (MoS2). Selon une autre variante de réalisation, la surface d'appui 56, ou bien le fond du premier demi-secteur 58 comporte des éléments de roulement permettant de faciliter son mouvement. Ces éléments de roulement sont par exemple des éléments de roulement à billes ou bien à rouleaux. Le coefficient de frottement entre la surface d'appui 56 et les demi-secteurs 58, 60 est par exemple de l'ordre de 0, 15.

Sur la Figure 6, les éléments d'appui 150, 148 viennent s'étendre à nouveau en saillie de la surface d'appui 56 tandis que le bord circulaire externe du premier demi-secteur 58 est en contact avec les éléments d'appui 150, 148.

En reprenant l'objet de la Figure 2, on observe que les organes d'arrêt 70, 72, au nombre de huit ici, sont écartés les uns des autres et à partir de cette position, ils vont alors être entraînés pour être rapprochés les uns des autres grâce à l'ensemble d'entraînement 86 décrit au droit de la Figure 4.

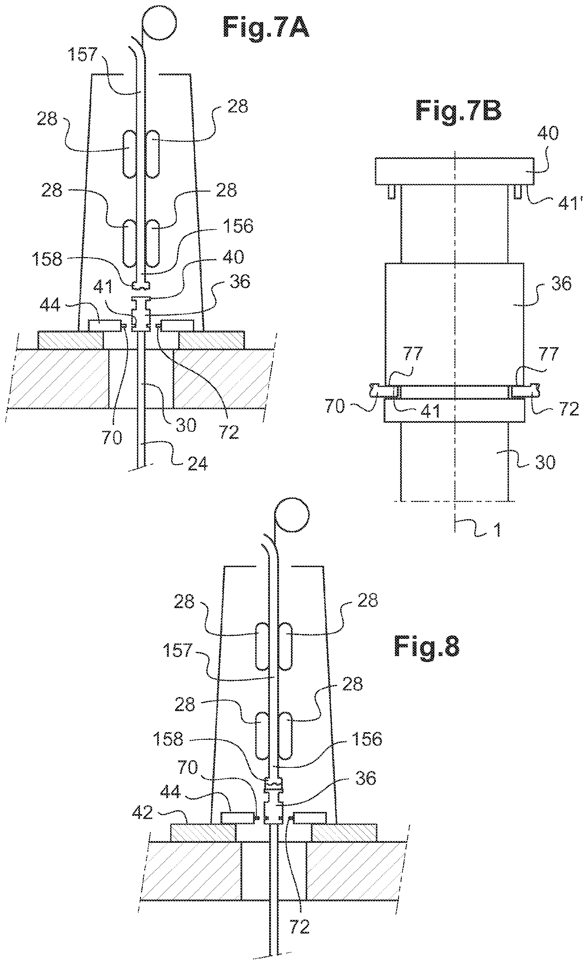

La Figure 7A illustre alors l'objet de la Figure 2, à la différence que les organes d'arrêt 70, 72 sont rapprochés les uns des autres et qu'ils forment une surface d'appui sur laquelle vient s'appuyer l'épaulement 41 de la partie avant 40 formant collerette de l'embout de connexion aval 36. La Figure 7B montre plus en détail l'épaulement 41 en appui sur les portées d'appui 77. Ainsi, le poids du tronçon 24 n'est plus repris par le câble de retenue 32, mais par la table de retenue 44 par l'intermédiaire des organes d'arrêt 70, 72. Dans cette position statique de l'embout de connexion aval 36, on vient approcher un embout de connexion amont 156 d'un tronçon suivant 157, présentant une autre partie avant 158 formant collerette. On vient alors ajuster en regard l'une de l'autre les deux parties avant 40, 158. Chacune de ces parties avant 40, 158 présente un même nombre d'orifices de serrage, par exemple huit et il convient alors de les ajuster angulairement pour qu'ils soient respectivement alignés. Pour ce faire, grâce aux actionneurs 152, 154 décrits en référence à la Figure 6, on entraîne en rotation la table de retenue 44 sur la surface d'appui 56 et partant, l'embout de connexion aval 36 qui s'appui lui, sur les portées d'appui 77 des organes d'arrêt 70, 72. L'amplitude du mouvement de rotation à imprimer à l'embout de connexion aval 36 est ici, avec huit d'orifices de serrage, inférieure à 25°. Ensuite, on vient solidariser les parties avant 40, 158 en insérant des vis de serrage à travers les orifices de serrage respectivement en regard, puis en y rapportant des rondelles et des écrous. Les deux embouts de connexion aval et amont 36, 156 sont alors solidaires l'un de l'autre.

Grâce aux paires de trains de chenilles latéraux 28 qui viennent alors en prise avec le tronçon suivant 157, on vient reprendre les efforts exercés par le tronçon 24 immergé pour libérer la table de retenue 44. On commande alors l'écartement des huit organes d'arrêt 70, 72 les uns des autres pour autoriser le passage des deux embouts de connexion aval et amont 36, 156 comme l'illustre la Figure 8. On dévide alors à son tour le tronçon suivant 157 jusqu'à son extrémité pour le raccorder à encore un autre tronçon selon un procédé analogue.

Lorsque l'extrémité d'un tronçon 24 est raccordée à un organe d'extrémité particulièrement volumineux tel qu'un ILT, acronyme de « In Line Tee » en langue anglaise ou un PLET, acronyme de « Pipeline End Termination » en langue anglaise, les organes d'arrêts 70, 72 sont dans la position ouverte, la table de retenue 44 est ouverte et l'embase 42 est retirée afin de permettre le passage de l'organe d'extrémité.

En revanche, lorsque l'embout de connexion aval 36 est raccordé à un embout de connexion amont 156 d'une ligne flexible analogue alors seuls les organes d'arrêts 70, 72 sont rétractés.

Enfin, lorsqu'un embout de connexion d'une ligne flexible de diamètre supérieur est amené, alors une table de retenue de diamètre supérieure est mise en œuvre.

## Revendications

1. Dispositif de retenue pour pouvoir retenir, sur un bâtiment de pose (10) de ligne flexible en milieu marin, un embout de connexion aval (36) d'une ligne flexible (14) sous-marine partiellement immergée, ladite ligne flexible (14) présentant un axe longitudinal (1) et ledit embout de connexion aval (36) présentant un épaulement (41) s'étendant radialement par rapport audit axe longitudinal (1), ledit dispositif de retenue comprenant :
- une table de retenue (44) présentant un passage central (66) au travers duquel est destiné à s'étendre ladite ligne flexible (14) et,
- une pluralité d'organes d'arrêt (70, 72) agencés autour dudit passage central (66) et mobiles entre une position ouverte où ils sont écartés les uns des autres et une position fermée où ils sont rapprochés les uns des autres,
- chacun desdits organes d'arrêt (70,72) présentant une portée d'appui (77) sur laquelle ledit épaulement (41) dudit embout de connexion aval (36) est destiné à reposer lorsque lesdits organes d'arrêts (70,72) sont en position fermée de manière à retenir ledit embout de connexion aval (36) à travers ledit passage central (66) ;
comprenant en outre au moins un ensemble d'entraînement (86) configuré pour entraîner lesdits organes d'arrêt (70, 72) entre ladite position ouverte et ladite position fermée ;
**caractérisé en ce que** ladite table de retenue (44) présente une pluralité de logements cylindriques radiaux (75) débouchant dans ledit passage central (66) dans lesquels sont agencés lesdits organes d'arrêt (70, 72), les organes d'arrêt (70, 72) étant mobiles en translation selon des directions radiales autour du passage central (66), et parallèlement au plan moyen Pm de la table de retenue (44).

2. Dispositif de retenue selon la revendication 1, **caractérisé en ce que** le logement cylindrique radial (75) et l'organe d'arrêt (70) sont à courbe directrice circulaire, et **en ce que** le dispositif de retenue comprend un élément d'arrêt en rotation dudit organe d'arrêt.

3. Dispositif de retenue selon la revendication 1 ou 2, **caractérisé en ce que** chacun desdits organes d'arrêt (70, 72) s'étend longitudinalement entre une extrémité d'appui (74) destinée à venir en saillie dans ledit passage central (66) et une extrémité d'entraînement (76) opposée à ladite extrémité d'appui (74), ladite extrémité d'entraînement (76) étant couplée audit ensemble d'entraînement (86).

4. Dispositif de retenue selon la revendication 3, **caractérisé en ce que** les ensembles d'entraînement (86) desdits organes d'arrêt (70, 72) sont couplés mécaniquement ensemble.

5. Dispositif de retenue selon l'une quelconque des revendications 1 à 4, **caractérisé en ce que** ladite table de retenue (44) comporte deux demi-secteurs (58, 60) articulés l'un par rapport à l'autre.

6. Dispositif de retenue selon la revendication 5 **caractérisé en ce qu'**il comprend un actionneur d'ouverture (64) configuré pour entraîner au moins l'un desdits demi-secteurs (58,60) par rapport à l'autre afin de permettre l'ouverture et/ou la fermeture de ladite table de retenue (44).

7. Dispositif de retenue selon l'une quelconque des revendications 1 à 6, **caractérisé en ce qu'**il comprend en outre une embase (42) présentant deux branches opposées (46, 48) et un espace libre (50) entre lesdites deux branches opposées (46, 48), et **en ce que** ladite table de retenue (44) est montée mobile en rotation sur ladite embase (42), tandis que ledit passage central (66) s'étend à l'aplomb dudit espace libre (50).

8. Dispositif de retenue selon la revendication 7, **caractérisé en ce que** lesdites deux branches opposées (46, 48) définissent une surface d'appui (56) sur laquelle est appuyée ladite table de retenue (44).

9. Dispositif de retenue selon la revendication 7 ou 8, **caractérisé en ce que** ladite embase (42) comprend un élément de réglage configuré pour ajuster l'écartement desdites deux branches opposées (46,48).

10. Dispositif de retenue selon l'une des revendications 7 à 9, **caractérisé en ce que** ladite embase (42) comprend au moins un actionneur pour pouvoir entraîner ladite table de retenue (44) en rotation.

11. Dispositif de retenue selon la revendication 10, **caractérisé en ce que** ladite embase (42) comprend au moins un élément d'appui (148, 150) configuré pour guider ladite table de retenue (44) dans son mouvement de rotation.

12. Dispositif de retenue selon la revendication 11, **caractérisé en ce que** ledit au moins un élément d'appui (148, 150) est mobile entre une position de retrait dans laquelle ledit au moins un élément d'appui (148, 150) est entièrement logé à l'intérieur de ladite embase (42) pour permettre l'ouverture de ladite table de retenue (44) et une position d'appui dans laquelle ledit au moins un élément d'appui (148, 150) s'étend en saillie de ladite embase (42) de manière à coopérer avec ladite table de retenue (44).

13. Dispositif de retenue selon la revendication 12 **caractérisé en ce qu'**il comprend un actionneur d'escamotage permettant d'entrainer ledit au moins un élément d'appui (148, 150) entre ladite position de retrait et ladite position d'appui.

## Patentansprüche

1. Haltevorrichtung, um, auf einem Wasserschiff zum Verlegen (10) einer flexiblen Rohrleitung in einer Meeresumgebung, ein abströmseitiges Verbindungsendstück (36) einer teilweise versenkten flexiblen Unterwasser-Rohrleitung (14) halten zu können, wobei die flexible Rohrleitung (14) eine Längsachse (1) aufweist und wobei das abströmseitige Verbindungsendstück (36) einen Absatz (41) aufweist, der sich relativ zu der Längsachse (1) in radialer Richtung erstreckt, wobei die Haltevorrichtung umfasst:
- eine Halteplatte (44), die einen mittigen Durchlass (66) aufweist, durch den hindurch sich zu erstrecken die flexible Rohrleitung (14) bestimmt ist, und
- eine Mehrzahl von Arretierorganen (70, 72), die um den mittigen Durchlass (66) herum angeordnet sind und beweglich sind zwischen einer geöffneten Position, wo sie voneinander beabstandet sind, und einer geschlossenen Position, wo sie aneinander herangeführt sind,
- wobei jedes der Arretierorgane (70, 72) einen Abstützausleger (77) aufweist, auf dem der Absatz (41) des abströmseitigen Verbindungsendstücks (36) aufzuliegen bestimmt ist, wenn die Arretierorgane (70, 72) in geschlossener Position sind, derart, dass das abströmseitige Verbindungsendstücks (36) durch den mittigen Durchlass (66) hindurch gehalten wird,
umfassend
ferner wenigstens eine Antriebsanordnung (86), die eingerichtet ist, um die Arretierorgane (70, 72) zwischen der geöffneten Position und der geschlossenen Position anzutreiben;
**dadurch gekennzeichnet, dass** die Halteplatte (44) eine Mehrzahl von radialen zylindrischen Aufnahmen (75) aufweist, die in dem mittigen Durchlass (66) ausmünden und in denen die Arretierorgane (70, 72) angeordnet sind, wobei die Arretierorgane (70, 72) gemäß radialen Richtungen um den mittigen Durchlass (66) herum und parallel zu der Mittelebene Pm der Halteplatte (44) in Translation beweglich sind.

2. Haltevorrichtung nach Anspruch 1, **dadurch gekennzeichnet, dass** die radiale zylindrische Aufnahme (75) und das Arretierorgan (70) eine kreisförmige Bogenachse aufweisen und dass die Haltevorrichtung ein sich drehendes Arretierelement des Arretierorgans umfasst.

3. Haltevorrichtung nach Anspruch 1 oder 2, **dadurch gekennzeichnet, dass** jedes der Arretierorgane (70, 72) sich in Längsrichtung erstreckt zwischen einem Abstützende (74), das dazu bestimmt ist, in den mittigen Durchlass (66) vorzuspringen, und einem Antriebsende (76), das dem Abstützende (74) gegenüberliegt, wobei das Antriebsende (76) an die Antriebsanordnung (86) gekoppelt ist.

4. Haltevorrichtung nach Anspruch 3, **dadurch gekennzeichnet, dass** die Antriebsanordnungen (86) der Arretierorgane (70, 72) mechanisch aneinander gekoppelt sind.

5. Haltevorrichtung nach einem der Ansprüche 1 bis 4, **dadurch gekennzeichnet, dass** die Halteplatte (44) zwei Halbkreisbögen (58, 60) aufweist, die relativ zueinander gelenkig sind.

6. Haltevorrichtung nach Anspruch 5, **dadurch gekennzeichnet, dass** sie einen Öffnungsaktuator (64) umfasst, der eingerichtet ist, um wenigstens einen der Halbkreisbögen (58, 60) relativ zu dem anderen anzutreiben, um das Öffnen und/oder das Schließen der Halteplatte (44) zu gestatten.

7. Haltevorrichtung nach einem der Ansprüche 1 bis 6, **dadurch gekennzeichnet, dass** sie ferner eine Basis (42) umfasst, die zwei gegenüberliegende Schenkel (46, 48) und einen Freiraum (50) zwischen den gegenüberliegenden Schenkeln (46, 48) aufweist, und dass die Halteplatte (44) auf der Basis (42) drehbeweglich montiert ist, während der mittige Durchlass (66) sich lotrecht zu dem Freiraum (50) erstreckt.

8. Haltevorrichtung nach Anspruch 7, **dadurch gekennzeichnet, dass** die zwei gegenüberliegenden Schenkel (46, 48) eine Abstützfläche (56) definieren, auf der die Halteplatte (44) abgestützt ist.

9. Haltevorrichtung nach Anspruch 7 oder 8, **dadurch gekennzeichnet, dass** die Basis (42) ein Einstellelement umfasst, das eingerichtet ist, um den Abstand der zwei gegenüberliegenden Schenkel (46, 48) anzupassen.

10. Haltevorrichtung nach einem der Ansprüche 7 bis 9, **dadurch gekennzeichnet, dass** die Basis (42) wenigstens einen Aktuator umfasst, um die Halteplatte (44) zur Drehung antreiben zu können.

11. Haltevorrichtung nach Anspruch 10, **dadurch gekennzeichnet, dass** die Basis (42) wenigstens ein Abstützelement (148, 150) umfasst, das eingerichtet ist, um die Halteplatte (44) in ihrer Drehbewegung zu führen.

12. Haltevorrichtung nach Anspruch 11, **dadurch gekennzeichnet, dass** das wenigstens eine Abstützelement (148, 150) beweglich ist zwischen einer eingezogenen Position, in der das wenigstens eine Abstützelement (148, 150) zur Gänze im Inneren der Basis (42) aufgenommen ist, um das Öffnen der Halteplatte (44) zu gestatten, und einer Abstützposition, in der das wenigstens eine Abstützelement (148, 150) sich von der Basis (42) vorspringend erstreckt, derart, dass es mit der Halteplatte (44) zusammenwirkt.

13. Haltevorrichtung nach Anspruch 12, **dadurch gekennzeichnet, dass** sie einen Versenkungsaktuator umfasst, der das Antreiben des wenigstens einen Abstützelements (148, 150) zwischen der eingezogenen Position und der Abstützposition gestattet.

## Claims

1. Holding device intended to hold, on an placement vessel (10) of flexible line in a marine environment, a downstream connection fitting end (36) of an underwater flexible line (14) partially immersed, said flexible line (14) having a longitudinal axis (1) and said downstream connection fitting end (36) having a shoulder (41) extending radially with respect to said longitudinal axis (1), said holding device comprising :
a holding table (44) having a central passage (66) through which said flexible line (14) is intended to extend and,
a plurality of stop members (70, 72) arranged about said central passage (66) and movable between an open position where they are spaced apart from each other and a closed position where they are brought closer from each other,
each one of said stop members (70, 72) having a bearing span (77) on which said shoulder (41) of said downstream connection fitting end (36) is intended to rest when said stop members (70, 72) are in a closed position so as to hold said downstream connection fitting end (36) through said central passage (66);
further comprising at least a driving assembly (86) configured to drive said stop members (70, 72) between said open position and said closed position ;
**characterized in that** said holding table (44) has a plurality of radial cylindrical housings (75) opening into said central passage (66) in which said stop members (70, 72) are arranged, the stop members (70, 72) being movable in translation along radial directions about the central passage (66), and parallel to the middle plan Pm of the holding table (44).

2. Holding device according to claim 1, **characterized in that** the radial cylindrical housing (75) and the stop member (70) have a circular directing curve, and **in that** the holding device comprises a rotation stop element of said stop member.

3. Holding device according to claim 1 or 2, **characterized in that** each one of said stop members (70, 72) extends longitudinally between a bearing end (74) intended to project into said central passage (66) and a driving end (76) opposed to said bearing end (74), said driving end (76) being coupled to said driving assembly (86).

4. Holding device according to claim 3, **characterized in that** the driving assemblies (86) of said stop members (70, 72) are mechanically coupled together.

5. Holding device according to any of claims 1 to 4, **characterized in that** said holding table (44) includes two half-sectors (58, 60) articulated the one to the other.

6. Holding device according to claim 5 **characterized in that** it comprises an opening actuator (64) configured to drive at least one of said half-sectors (58, 60) with respect to the other in order to allow the opening and/or the closing of said holding table (44).

7. Holding device according to any of claims 1 to 6, **characterized in that** it further comprises a base plate (42) having two opposite branches (46, 48) and an open space (50) between said two opposite branches (46, 48), and **in that** said holding table (44) is movably assembled for rotation on said base plate (42), while said central passage (66) extends rightly over said free space (50).

8. Holding device according to claim 7, **characterized in that** said two opposite branches (46, 48) define a bearing surface (56) on which is supported said holding table (44).

9. Holding device according to claim 7 or 8, **characterized in that** said base plate (42) comprises an adjustment element configured to adjust the spacing between said two opposite branches (46, 48).

10. Holding device according to one of claims 7 to 9, **characterized in that** said base plate (42) comprises at least an actuator to be able to drive said holding table (44) for rotation.

11. Holding device according to claim 10, **characterized in that** said base plate (42) comprises at least one bearing element (148, 150) configured to guide said holding table (44) within its rotational movement.

12. Holding device according to claim 11, **characterized in that** said at least one bearing element (148, 150) is movable between a withdrawal position in which said at least one bearing element (148, 150) is entirely housed within said base plate (42) to allow the opening of said holding table (44) and a support position in which said at least one bearing element (148, 150) projects from said base plate (42) so as to cooperate with said holding table (44).

13. Holding device according to claim 12, **characterized in that** it comprises a retraction actuator allowing to drive said at least one bearing element (148, 150) between said withdrawal position and said support position.
